# FASCICULE DE BREVET EUROPEEN

(11) **EP 0 646 987 B1**
(45) Date de publication et mention de la délivrance du brevet: **25.02.1998**
(21) Numéro de dépôt: 94402136.9
(22) Date de dépôt: 26.09.1994
(51) Int. Cl.: H01R 4/24, H04Q 1/14

(54) **Dispositif de raccordement fiabilisé**
Verbindungsvorrichtung mit verbesserter Zuverlässigkeit
Connection assembly having improved reliability

(30) Priorité: 28.09.1993 FR 9311505
(43) Date de publication de la demande: 05.04.1995
(73) Titulaire: ALCATEL ALSTHOM COMPAGNIE GENERALE D'ELECTRICITE, 75008 Paris (FR)
(72) Inventeur: Audeval, Fabrice, F-08000 Charleville Mézières (FR); Jacques, Didier, F-08000 Lafrancheville (FR)
(74) Mandataire: Buffière, Michelle

(56) Documents cités:
- EP-A- 0 315 345
- EP-A- 0 426 384
- EP-A- 0 476 590
- US-A- 3 923 362
- US-A- 3 985 416

## Description

La présente invention concerne les équipements de connexion de fils électriques et plus particulièrement d'une ligne téléphonique ou d'un ensemble de lignes téléphoniques à une jarretière ou à une pluralité de jarretières. Elle porte sur un dispositif de raccordement fiabilisé.

De tels dispositifs de raccordement sont déjà connus.

Ils se présentent de manière générale sous la forme d'une réglette de connexion, équipée d'au moins une rangée de contacts accessibles sur une face avant et une face arrière de la réglette. Les contacts sont de manière courante des contacts autodénudants ayant au moins une fourche autodénudante dite avant. Les conducteurs des lignes téléphoniques sont câblés en face arrière sur les contacts et les fils des jarretières reçus en face avant dans les fourches autodénudantes avant.

Le document US-A-4099822 décrit un dispositif de raccordement de ce type, dans lequel les contacts ont chacun également une fourche autodénudante arrière. Ce dispositif comporte en outre une barrette arrière, de positionnement des conducteurs des lignes et de raccordement simultané de ces conducteurs aux fourches autodénudantes arrière des contacts d'une même rangée dans la réglette. Cette barrette arrière est pourvue de canaux de réception et de positionnement des conducteurs individuels, au pas des fourches autodénudantes arrière. Elle s'enfiche sur ou dans la face arrière de la réglette pour le raccordement des conducteurs dans les fourches autodénudantes arrière. Ce même dispositif comporte également une ou des barrettes segmentées avant, similaires à la barrette arrière et assurant le raccordement des fils des jarretières aux fourches autodénudantes avant de chaque rangée de contacts.

La barrette arrière est relativement complexe pour assurer un maintien des conducteurs positionnés dans ses canaux, quand ces conducteurs sont en nombre relativement important.

La force d'insertion des conducteurs dans les fourches autodénudantes arrière est très importante. Une déconnexion des conducteurs est difficile et concerne l'ensemble des conducteurs raccordés à la rangée de fourches autodénudantes arrière. Il en est de même pour la barrette avant, ceci dans des proportions moindres quand celle-ci est segmentée en plusieurs barrettes avant.

Le document EP-A-0220884 décrit un autre dispositif de raccordement de ce type, à poussoirs avant pour le raccordement des fils de chaque jarretière sur les fourches autodénudantes avant. Chaque poussoir est monté coulissant le long de deux fourches autodénudantes avant et dans une cheminée qui protège chacune de ces fourches autodénudantes avant. Il comporte deux jambages, fendus et solidaires d'une tête terminale, qui sont percés chacun d'un trou d'insertion de l'un des fils d'une jarretière. Les deux fils de la jarretière sont raccordés à deux fourches autodénudantes avant, par actionnement du poussoir dans les deux cheminées avant le long des deux fourches autodénudantes.

La connexion et la déconnexion des jarretières individuelles sont rendues rapides et aisées. Dans ce même dispositif, le câblage des conducteurs des lignes se fait de manière traditionnelle, en face arrière de la réglette, sur les extrémités arrière accessibles des contacts, à l'aide d'un outil traditionnel de raccordement des conducteurs les uns après les autres;

Le document EP-A-O 315 345 décrit un dispositif de raccordement comportant au moins un contact autodénudant à deux fourches autodénudantes opposées dites avant et arrière, monté mobile dans une cheminée d'une position dite remontée à une position dite enfoncée, par actionnement d'un poussoir dans une partie terminale avant ouverte de la cheminée d'une position tirée à une position fermée. Un conducteur reçu dans une entrée prévue dans une partie terminale arrière de la cheminée est connecté à la fourche autodénudante arrière par actionnement du poussoir en position fermée pour la mise du contact de sa position remontée à sa position enfoncée. Un autre conducteur ou fil reçu dans le poussoir remis en position tirée est connecté à la fourche autodénudante avant par un nouvel actionnement du poussoir en position fermée. Il peut être déconnecté quand le poussoir est actionné en position tirée.

La présente invention a pour but de permettre en outre une éventuelle déconnexion aisée et rapide du conducteur de la fourche autodénudante arrière du contact.

Elle a pour objet un dispositif de raccordement, comportant d'une part un contact autodénudant, à deux fourches autodénudantes opposées et dites avant et arrière, monté dans une cheminée ouverte à une extrémité dite avant et pourvue d'une entrée de conducteur à connecter à ladite fourche autodénudante arrière, et d'autre part un poussoir avant monté mobile dans la cheminée et sur le contact et équipé de moyens de maintien d'un fil à connecter à ladite fourche autodénudante avant, ledit contact étant lui-même monté mobile dans ladite cheminée entre une position dite remontée, pour laquelle ladite fourche autodénudante avant est au moins partiellement saillante extérieurement sur ladite extrémité avant de la cheminée et ladite fourche autodénudante arrière est en retrait par rapport à l'entrée de conducteur, et une position dite enfoncée, pour laquelle lesdites fourches autodénudantes avant et arrière s'étendent dans une partie terminale dite avant et la partie terminale arrière de la cheminée, par enfoncement dudit poussoir dans la cheminée jusqu'à une position dite fermée sur l'extrémité avant, caractérisé en ce que ledit poussoir et ledit contact comportent des moyens de couplage l'un à l'autre, pour l'entraînement dudit contact dans ladite cheminée de ladite position enfoncée à ladite position remontée par actionnement dudit poussoir de ladite position fermée à une position dite totalement tirée.

Le dispositif présente avantageusement en outre au moins l'une des caractéristiques additionnelles suivantes :
- ledit contact comporte deux pattes latérales, saillantes et opposées, et ladite cheminée comporte intérieurement deux fentes en vis-à-vis recevant lesdites pattes latérales du contact et définissant la course du contact entre ses positions enfoncée et remontée.
- le dispositif comporte un moyen de verrouillage dudit contact en position enfoncée.
- ledit contact présente une lumière allongée, dans une partie intermédiaire du contact, et le poussoir comporte un ergot reçu prisonnier dans ladite lumière pour son couplage au contact.
- ladite lumière est une lumière d'élasticité associée à l'une des fourches autodénudantes avant et arrière du contact, définissant une course possible du poussoir relativement au contact entre ladite position fermée sur l'extrémité avant de la cheminée et une position dite semi tirée du poussoir.
- ladite cheminée comporte un épaulement intérieur avant et quasi terminal, de butée de fin de course du poussoir, au-delà de ladite position semi-tirée, dans ladite position totalement tirée.

Les caractéristiques et avantages de la présente invention ressortiront de la description détaillée faite ci-après d'un exemple de réalisation illustré dans les dessins ci-annexés. Dans ces dessins :
- les figures 1 et 2 sont deux vues en perspective du dispositif de raccordement selon l'invention, illustré en position dite ouverte et vu depuis deux de ses faces opposées dites inférieure et supérieure, respectivement.
- la figure 3 est une vue en perspective du dispositif de la figure 2, illustré en position dite fermée et verrouillée,
- la figure 4 est une vue en coupe du dispositif, faite parallèlement à ses faces supérieure et inférieure, pour la position fermée du dispositif,
- la figure 5 est autre vue en coupe selon la ligne V-V de la figure 4.
- les figures 6 et 7 sont deux vues en coupe correspondante à la figure 4, mais pour une position dite tirée et une position dite semi tirée d'un poussoir appartenant au dispositif.

Le dispositif de raccordement illustré dans ces figures est dit élémentaire, dans la mesure où il assure le raccordement d'un seul conducteur à un seul fil. Il constitue en pratique la partie modulaire d'un dispositif de raccordement des conducteurs d'un ensemble de lignes aux fils d'une pluralité de jarretières, du type à barrette de connexion et à poussoirs dits avant. Il est décrit dans les conditions d'utilisation les plus courantes d'une telle barrette montée sur une fixation verticale, bien que son orientation peut être quelconque.

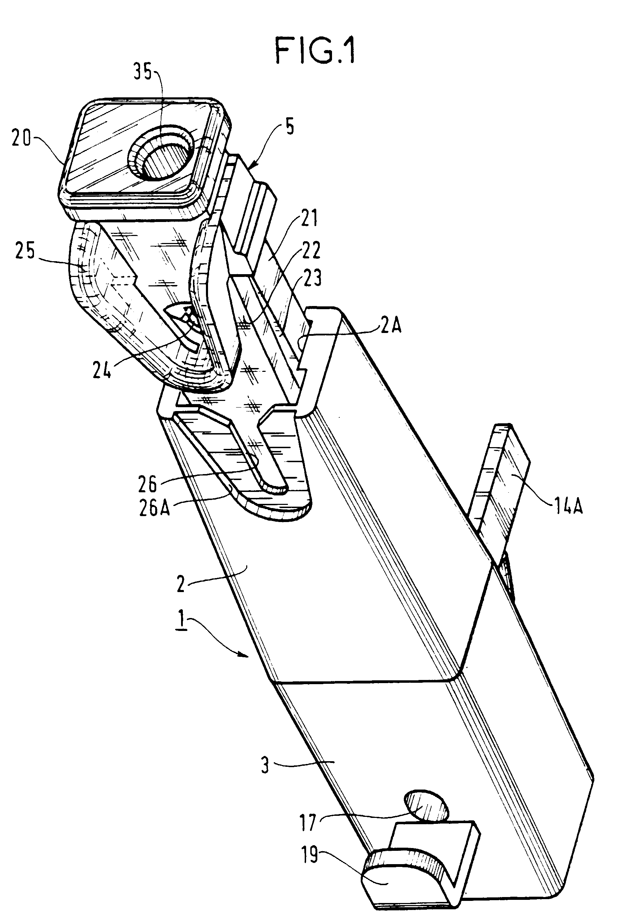

En se référant à l'ensemble de ces figures 1 à 7, on voit que le dispositif comporte une cheminée 1, réalisée en deux parties l'une dite cheminée avant 2 et l'autre dite cheminée arrière 3, un contact 4 monté dans la cheminée 1 et un poussoir 5 monté dans la cheminée avant 2.

La cheminée avant 2 et la cheminée arrière 3 sont montées bout à bout et communiquent directement l'une avec l'autre à leur jonction. Elles sont assemblées l'une à l'autre aux ultra-sons ou en variante par encliquetage en étant alors équipées de dispositions convenables à cet effet.

La cheminée avant 2 est ouverte à l'avant. Elle reçoit par son ouverture avant 2A le poussoir 5, monté mobile dans la cheminée avant et fermant son ouverture avant 2A. La cheminée arrière 3 a par contre une extrémité arrière 3A directement fermée.

La cheminée avant présente sur sa longueur un évidement 6 de section droite sensiblement carrée définissant le logement partiel du contact et le logement du poussoir mobile.

La cheminée arrière présente quant à elle un évidement intérieur 7, de section droite rectangulaire correspondant à l'épaisseur du contact et mais adaptée pour le déplacement possible et limité du contact dans la cheminée 1, ainsi qu'il sera précisé ci-après.

Le contact 4 est un contact autodénudant, de forme globale rectangulaire, qui comporte deux fourches autodénudantes tête bèche, dites avant pour l'une d'elles 10 et arrière pour l'autre 11, qui ont leur entrée en Vé 10A ou 11A, selon la fourche, sur les petits côtés opposés du contact. Il comporte deux lumières oblongues 12 et 13, de déformation élastique des fourches autodénudantes respectives. Ces lumières sont alignées avec les fourches et en vis-à-vis dans la partie intermédiaire du contact, en restant séparées et indépendantes l'une de l'autre.

Ce contact 4 est monté mobile dans la cheminée 1. Il comporte à cet effet deux pattes 14 saillantes latéralement sur ses bords longitudinaux, qui sont reçues dans deux fentes 15 prévues intérieurement à leur effet dans les parois de la cheminée, qui sont transversales au contact et dites parois latérales.

Ces fentes 15 sont de préférence réalisées dans la partie avant de la cheminée arrière 3 et les pattes 14 du contact prévues sur la partie sensiblement arrière du contact. Ces dispositions permettent le positionnement du contact dans la cheminée arrière puis la mise en place de la cheminée avant sur le contact et la solidarisation des deux cheminées.

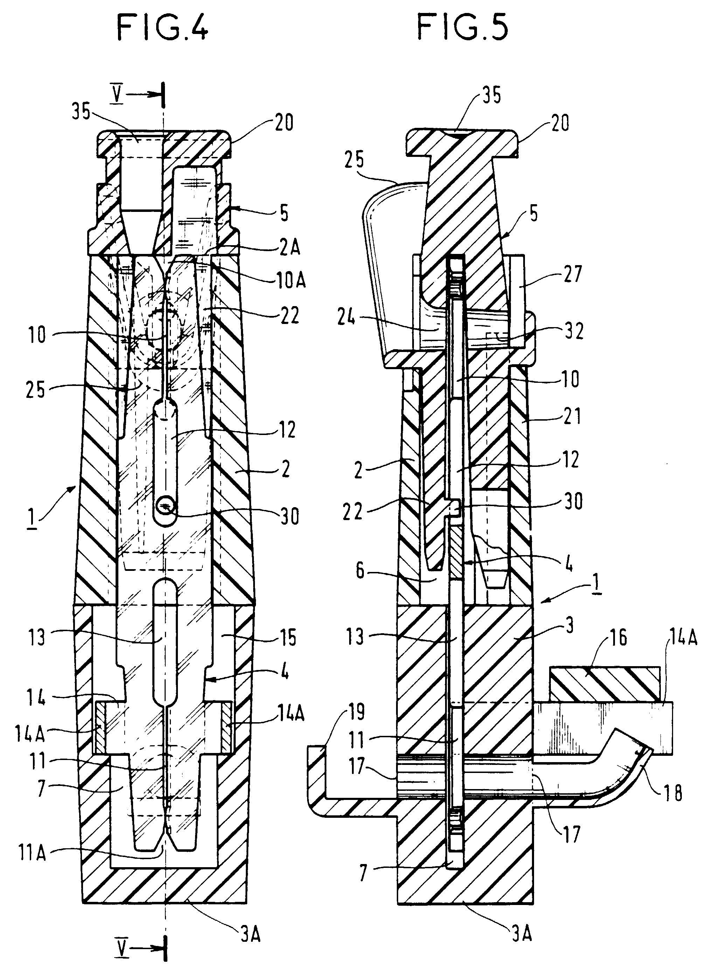

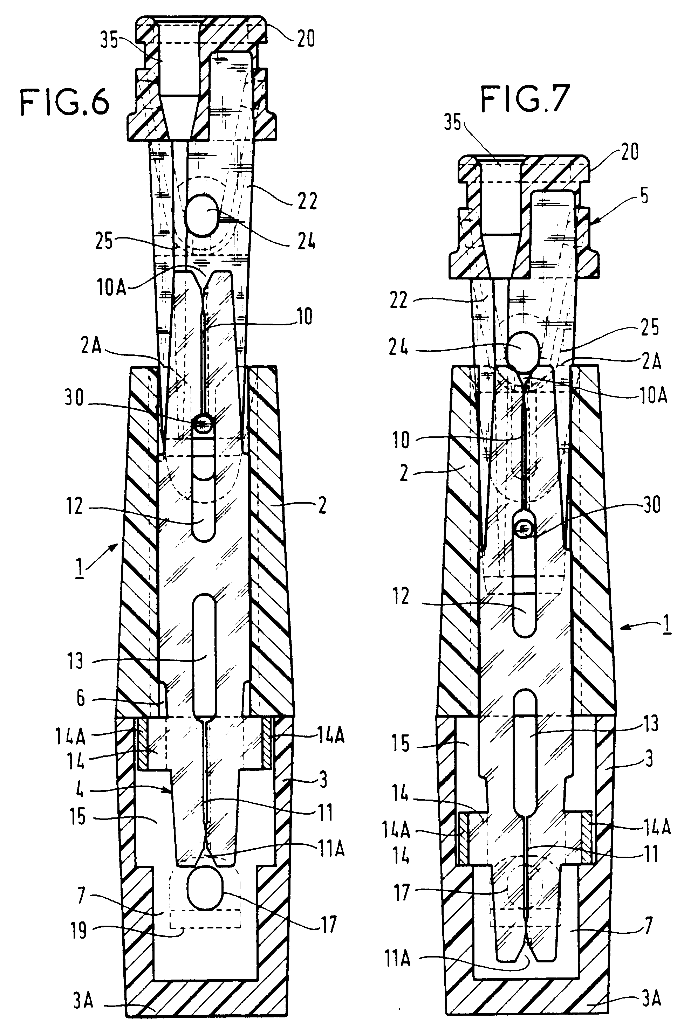

Ces fentes 15 définissent la course possible du contact 4 dans la cheminée, entre une position extrême dite position normale ou enfoncée (Figure 4) pour laquelle les pattes 14 sont en butée contre les extrémités arrière des fentes 15 et une autre position extrême dite position remontée (Fig 6) pour laquelle les pattes 14 sont en butée contre les extrémités avant des fentes 15. Leur longueur est de l'ordre de celle des fourches autodénudantes 10 et 11.

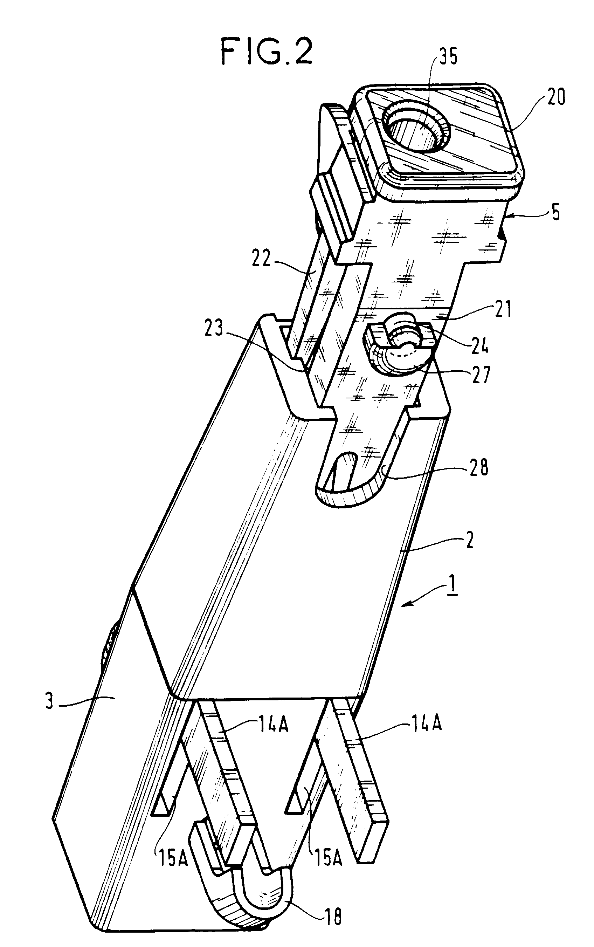

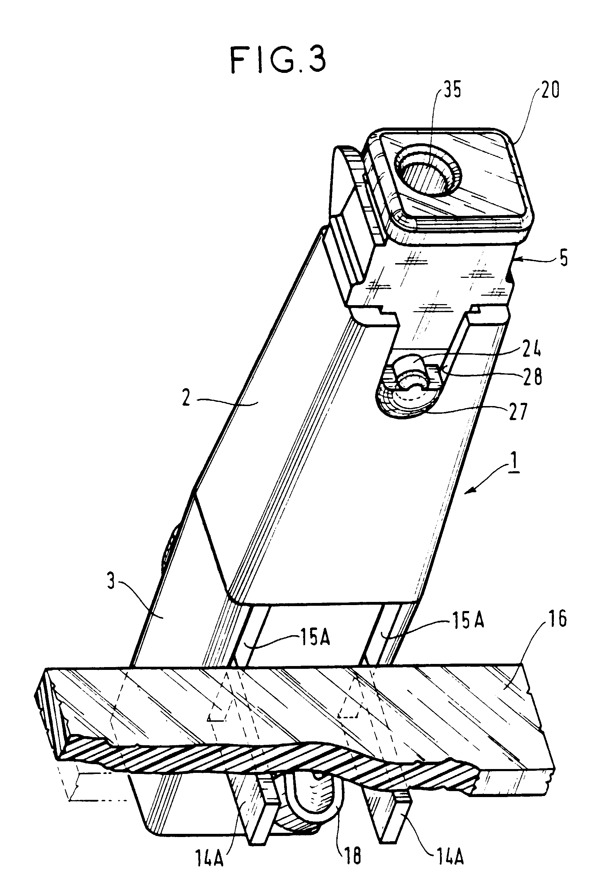

Ainsi que plus particulièrement visible dans les figures 2 et 3, ces fentes 15 sont avantageusement ouvertes en long sur l'extérieur à travers l'une des parois parallèles au contact, dite paroi supérieure de la cheminée arrière 3, en y définissant deux fenêtres 15A. Ces fenêtres reçoivent deux bras 14A prolongeant les pattes 14 et pliées à angle droit sur celles-ci en formant avec elles deux excroissances latérales en L sur le contact. Les bras sont saillants sur l'extérieur de la cheminée arrière. Ils permettent le verrouillage du contact en position enfoncée, réalisé par une plaque en plastique 16 d'immobilisation, rapportée et fixée contre la cheminée juste à l'avant des bras 14A du contact mis dans cette position enfoncée. Cette fixation se fait par des moyens de rétention convenables, non représentés, tels que clips élastiques d'accrochage ou des vis.

La cheminée arrière 3 comporte en outre deux trous 17 d'entrée d'un conducteur à raccorder à la fourche autodénudante arrière 11. Ces trous 17 sont en vis-à-vis l'un de l'autre et réalisés dans la partie arrière de la paroi inférieure et de la paroi supérieure opposée de cette cheminée arrière 3. Il leur correspond extérieurement une gouttière 18, de guidage du conducteur, saillante sur la paroi supérieure de la cheminée 3 et une butée 19 de fin d'insertion du conducteur, sur la paroi inférieure au regard du trou dans cette paroi.

La gouttière a une forme arquée, dont la concavité est tournée vers l'avant de la cheminée. Elle permet l'insertion du conducteur dans la gouttière 18 et les trous 17, depuis l'avant de la cheminée 1, jusqu'à son arrêt contre la butée 19. Le raccordement du conducteur est précisé ultérieurement.

Le poussoir avant 5 est notamment affecté au raccordement d'un fil dans la fourche autodénudante avant 10. Il est en tant que tel connu pour cette seule fonction.

En se référant notamment aux figures 1, 2, 3 ou 5 on voit que ce poussoir 5 comporte une tête d'actionnement 20, de laquelle est solidaire un jambage fendu et ainsi divisé en deux branches 21 et 22 séparées par une fente 23. Les branches coulissent dans la cheminée avant 2 et sur la partie avant du contact 4 quand celui-ci est en position normale ou enfoncée dans la cheminée. Celles-ci sont adaptées au contour intérieur de l'évidement avant 6, l'une des branches 21 étant avantageusement légèrement plus large et plus épaisse que l'autre, étant forcée dans l'ouverture 2A et dans la partie terminale avant de la cheminée et étant coulissante librement ensuite sensiblement jusqu'au niveau de jonction des cheminées avant et arrière. La butée de la tête 20 sur l'ouverture 2A définit une position fermée du poussoir 5 sur la cheminée 1.

Les branches 21 et 22 sont traversées de part et d'autre par deux trous 24 d'entrée de fil, réalisés juste à l'arrière de la tête. Il leur correspond un vé de guidage 25, partant de la tête 20 et s'étendant légèrement jusqu'au delà du trou 24 sur l'extérieur de la branche 22, en étant décollée de cette branche, pour l'introduction en aveugle du fil dans ce trou 24, une fente 26 et une empreinte 26A dans la partie avant de la paroi inférieure de la cheminée avant 2, recevant ce vé de guidage 25, un oeilleton 27 sur l'extérieur de la branche 22 en bout du trou dans cette branche, formant butée de fin d'introduction de fil et une échancrure 28 dans la partie terminale avant de la paroi supérieure de la cheminée avant, recevant l'oeilleton, pour la position fermée du poussoir.

Ce poussoir 5 est avantageusement adapté pour permettre en outre le déplacement du contact 4 dans la cheminée 1, ainsi que visible dans les figures 4 à 7.

A cet effet, l'une des ses branches, de préférence la branche 22, porte un ergot 30 légèrement saillant vers l'autre branche 21. Cet ergot est reçu dans la lumière 12 d'élasticité de la fourche autodénudante avant 10 et est prisonnier dans cette lumière. Il assure le couplage du poussoir et du contact. Sa position arrière dans la lumière 12 correspond à la position fermée du poussoir 5, pour laquelle la tête 20 est en butée sur l'ouverture 2A (fig. 4 et 5). Avantageusement un bossage non représenté dans la lumière fait obstacle de maintien de l'ergot en position arrière dans la lumière. La position avant de l'ergot 30 dans la lumière 12, sans action résultante sur le contact 4 restant en position enfoncée dans la cheminée, définit une position semi ouverte ou partiellement tirée du poussoir (Fig 7). Cette même position avant de l'ergot et la sollicitation résultante du contact 4 en position remontée donnent la position totalement ouverte ou tirée du poussoir (Fig 6). Dans cette position totalement ouverte ou tirée du poussoir, la branche 21 du poussoir est en butée de fin de course possible contre un épaulement interne d'appui 32 prévu à cet effet dans la partie terminale avant de la cheminée avant 2 (Figure 5). Cette position totalement tirée du poussoir est possible en l'absence de la plaque d'immobilisation 16 du contact 4, qui est préalablement enlevée.

En variante, l'ergot prisonnier dans la lumière est constitué par un axe de liaison des deux branches 21 et 22.

Dans ce dispositif de raccordement, le poussoir 5 est en outre équipé d'un point de test 35, ouvert et décentré sur la tête 20 et la traversant pour déboucher en regard du contact, d'un côté de sa fourche autodénudante avant 10.

En outre, la cheminée 1 peut à souhait être remplie de graisse pour fiabiliser la connexion réalisée.

Le mode de connexion d'un conducteur à la fourche autodénudante arrière 11 et celui d'un fil à la fourche autodénudante avant 10 sont illustrés dans les figures 6, 7 et 5 et réalisés comme suit, lorsque la plaque d'immobilisation est enlevée.

Le poussoir étant totalement tiré (Fig 6), le contact 4 se trouve en position remontée dans la cheminée 1. Dans ces conditions, le conducteur est inséré depuis l'avant de la cheminée dans la gouttière de guidage 18 et les trous quasi arrière d'entrée 17. Il est ainsi positionné- en aveugle en regard de l'entrée en Vé 11A de la fourche autodénudante arrière 11. Le simple appui sur le poussoir fait passer le contact 4 en position enfoncée dans la cheminée et assure la connexion du conducteur dans la fourche autodénudante arrière 11. La plaque d'immobilisation est dès lors de préférence mise en place pour verrouiller le contact en position enfoncée et verrouiller la connexion du conducteur. Le conducteur peut être déconnecté à souhait ultérieurement, en enlevant la plaque d'immobilisation et remettant le poussoir en position totalement tirée.

La connexion du fil dans la fourche autodénudante avant peut être faite en même temps que celle du conducteur ou séparément. Elle peut surtout être défaite et refaite indépendamment de la connexion arrière verrouillée, quand le poussoir est en position semi ouverte (Figure 7). Le fil inséré dans le Vé de guidage 25 et les trous 24 est ainsi positionné en regard de l'entrée 10A de la fourche autodénudante avant 10. Il est raccordé dans cette fourche en poussant le poussoir en position fermée (Fig 4, 5).

En variante, la mise en position remontée du contact 4 dans la cheminée peut être réalisée sans couplage du poussoir et du contact, en particulier en agissant directement ou à l'aide d'un tournevis ou autre sur le contact ou en agissant sur ses bras 14A, pour l'entraîner en position remontée dans la cheminée. Le poussoir assure sa mise en position enfoncée.

Le dispositif de raccordement peut être utilisé tel que pour le raccordement d'un seul conducteur à un seul fil. Il constitue de préférence la partie modulaire d'une réglette de connexion de raccordement des conducteurs d'un ensemble de lignes à une pluralité de jarretières, dans laquelle les dispositifs de raccordement élémentaires sont juxtaposés en une ou plusieurs rangées. Dans une telle réglette, la plaque d'immobilisation de la connexion arrière du conducteur est commune à la rangée de dispositifs. Elle permet, dès lors que les connexions arrière sont effectuées, de les verrouiller et de cacher le câblage arrière.

Ce dispositif permet avantageusement une connexion arrière et avant depuis la face avant, sans outil spécial, par le seul poussoir avant à cet effet. Il permet à volonté la déconnexion avant et/ou arrière sur le ou les seuls contacts souhaités d'une réglette.

Bien entendu, des dispositions différentes de celles indiquées ci-avant peuvent être prévues sur le contact et le poussoir pour leur couplage en vue de la double course du poussoir en position semi tirée et totalement tirée depuis sa position fermée.

Dans une réglette de connexion, le poussoir peut également être double et reçu dans deux cheminées adjacentes dont les contacts sont affectés au raccordement d'une paire de conducteurs à une paire de fils d'une jarretière.

## Revendications

1. Dispositif de raccordement, comportant d'une part un contact autodénudant (4), à deux fourches autodénudantes opposées et dites avant (10) et arrière (11), monté dans une cheminée (1) ouverte à une extrémité dite avant et pourvue d'une entrée (17) de conducteur à connecter à ladite fourche autodénudante arrière (11), et d'autre part un poussoir avant monté mobile dans cheminée et sur le contact et équipé de moyens de maintien (24, 25, 27) d'un fil à connecter ladite fourche autodénudante avant (10), ledit contact (4) étant lui-même monté mobile dans ladite cheminée (1) entre une position dite remontée, pour laquelle ladite fourche autodénudante avant (10) est au moins partiellement saillante extérieurement sur ladite extrémité avant de la cheminée (1) et ladite fourche autodénudante arrière (11) est en retrait par rapport à l'entrée de conducteur (17), et une position dite enfoncée, pour laquelle lesdites fourches autodénudantes avant et arrière (10,11) s'étendent dans une partie terminale dite avant et la partie terminale arrière de la cheminée (1) , par enfoncement dudit poussoir (5) dans la cheminée jusqu'à une position dite fermée sur l'extrémité avant, caractérisé en ce que ledit poussoir (5) et ledit contact (4) comportent des moyens de couplage (30, 12) l'un à l'autre, pour l'entraînement dudit contact (4) dans ladite cheminée (1) de ladite position enfoncée à ladite position remontée par actionnement dudit poussoir de ladite position fermée à une position dite totalement tirée.

2. Dispositif selon l'une des revendications 1, caractérisé en ce que ledit contact (4) comporte deux pattes latérales (14), saillantes et opposées, et en ce que ladite cheminée (1) comporte intérieurement deux fentes (15) en vis-à-vis recevant lesdites pattes latérales du contact et définissant la course du contact entre ses positions enfoncée et remontée.

3. Dispositif selon l'une des revendications 1 et 2, caractérisé en ce qu'il comporte un moyen de verrouillage (14A, 16) dudit contact (4) en position enfoncée.

4. Dispositif selon la revendication 3, caractérisé en ce que ledit moyen de verrouillage comporte au moins un bras transversal (14A), prévu sur ledit contact (4) et saillant extérieurement sur la cheminée, à travers une fenêtre correspondante (15A) de la cheminée, et une plaque d'immobilisation (16) de chaque bras, montée amovible sur l'extérieur de la cheminée.

5. Dispositif selon l'une des revendications 2 à 4, caractérisé en ce que ladite cheminée (1) est constituée par une cheminée arrière (3) et une cheminée avant (2) montées bout à bout, solidarisées l'une à l'autre et ouvertes l'une dans l'autre à leur jonction.

6. Dispositif selon la revendication 5, caractérisé en ce que lesdites fentes (15) s'étendent dans une partie avant de ladite cheminée arrière (3).

7. Dispositif selon l'une des revendications 1 à 6, caractérisé en ce que ladite entrée (17) de conducteur est formée de deux trous dans les parties arrière de deux parois de la cheminée, parallèles au contact (4) et, extérieurement sur ces parois, d'une gouttière de guidage (18) débouchant dans l'un des trous et d'une butée d'arrêt (19) en regard de l'autre trou.

8. Dispositif selon l'une des revendications 1 à 7, caractérisé en ce que lesdits moyens de couplage (30, 12) comportent une lumière allongée (12), dans une partie intermédiaire du contact (4), et un ergot (30) prévu sur ledit poussoir (5) et reçu prisonnier dans ladite lumière.

9. Dispositif selon la revendication 8, caractérisé en ce que ladite lumière est une lumière d'élasticité associée à l'une des fourches autodénudantes avant et arrière (10, 11) du contact, définissant une course possible du poussoir relativement au contact entre ladite position fermée sur l'extrémité (2A) de la cheminée (1) et une position dite semi tirée du poussoir (5).

10. Dispositif selon l'une des revendications 8 et 9, caractérisé en ce que ladite cheminée comporte un épaulement intérieur avant et quasi terminal (32), de butée de fin de course du poussoir, au-delà de ladite position semi-tirée, dans une position dite totalement tirée.

11. Dispositif selon l'une des revendications 1 à 10, caractérisé en ce que ladite cheminée (1) est remplie de graisse.

12. Réglette de connexion, caractérisée en ce qu'elle est formée d'une série de dispositifs, selon l'une des revendications 1 à 11, juxtaposés en au moins une rangée.

## Patentansprüche

1. Verbindungsvorrichtung, umfassend einerseits einen selbstreinigenden, aus zwei selbstreinigenden, gegenüberliegenden, sogenannten vorderen (10) und rückwärtigen (11) Gabeln bestehenden Kontakt (4), welcher in einer Hülse (1) angebracht ist, die an einem sogenannten vorderen Ende offen ist und mit einer Einführung (17) für einen an die besagte rückwärtige selbstreinigende Gabel (11) anzuschließenden Leiter versehen ist, und andererseits einen vorderen Drücker, welcher beweglich in der Hülse und auf dem Kontakt montiert ist und mit Haltevorrichtungen (24, 25, 27) für einen Draht zum Anschluß der besagten selbstreinigenden vorderen Gabel (10) ausgerüstet ist, wobei der besagte Kontakt (4) selbst in der besagten Hülse (1) beweglich montiert ist zwischen einer sogenannten vorstehenden Position, in welcher die besagte selbstreinigende vordere Gabel (10) zumindest teilweise außen über das besagte vordere Ende der Hülse (1) hinausragt und die besagte selbstreinigende rückwärtige Gabel (11) in bezug auf die Leitereinführung (17) zurückgesetzt ist, und einer sogenannten versenkten Position, in welcher sich die besagten selbstreinigenden vorderen und rückwärtigen Gabeln (10, 11) in einen sogenannten vorderen Endteil und den rückwärtigen Endteil der Hülse (1) erstrecken, durch Niederdrücken des besagten Drückers (5) in der Hülse bis zu einer sogenannten geschlossenen Position am vorderen Ende, dadurch gekennzeichnet, daß der besagte Drücker (5) und der besagte Kontakt (4) gegenseitige Kupplungsvorrichtungen (30, 12) umfassen zur Mitnahme des besagten Kontaktes (4) in der besagten Hülse (1) aus der sogenannten versenkten Position in die sogenannte vorstehende Position durch Fortbewegung des besagten Drückers aus der sogenannten geschlossenen Position in eine sogenannte vollkommen gezogene Position.

2. Vorrichtung gemäß Anspruch 1, dadurch gekennzeichnet, daß der besagte Kontakt (4) zwei vorspringende und gegenüberliegende Seitenklauen (14) umfaßt, und daß die besagte Hülse (1) innen zwei einander gegenüberliegende Schlitze (15) aufweist, welche die besagten Seitenklauen des Kontaktes aufnehmen und den Hub des Kontaktes zwischen seiner vorstehenden und seiner versenkten Position begrenzen.

3. Vorrichtung gemäß einem der Ansprüche 1 und 2, dadurch gekennzeichnet, daß sie eine Verriegelungsvorrichtung (14A, 16) für den besagten Kontakt (4) in der versenkten Position umfaßt.

4. Vorrichtung gemäß Anspruch 3, dadurch gekennzeichnet, daß die besagte Verriegelungsvorrichtung mindestens einen Querarm (14A) umfaßt, welcher auf dem besagten Kontakt (4) vorgesehen ist und durch eine entsprechende Öffnung (15A) in der Hülse nach außen aus der Hülse hinausragt, und eine Fixierplatte (16) für jeden Arm, welche abnehmbar außen an der Hülse montiert ist.

5. Vorrichtung gemäß einem der Ansprüche 2 - 4, dadurch gekennzeichnet, daß die besagte Hülse (1) aus einer rückwärtigen Hülse (3) und einer vorderen Hülse (2) besteht, die stumpf aufeinander montiert sind, miteinander kraftschlüssig verbunden sind und an ihrer Verbindungsstelle zueinander offen sind.

6. Vorrichtung gemäß Anspruch 5, dadurch gekennzeichnet, daß sich die besagten Schlitze (15) in einen vorderen Teil der besagten rückwärtigen Hülse (3) erstrecken).

7. Vorrichtung gemäß einem der Ansprüche 1 - 6, dadurch gekennzeichnet, daß die besagte Leitereinführung (17) aus zwei Löchern im rückwärtigen Teil von zwei parallel zum Kontakt (4) verlaufenden Wänden der Hülse, sowie aus einer außen auf diesen Wänden befindlichen Führungsrinne (18), welche in eines der Löcher mündet, und aus einem dem anderen Loch gegenüberliegenden Endanschlag (19) gebildet wird.

8. Vorrichtung gemäß einem der Ansprüche 1 - 7, dadurch gekennzeichnet, daß die besagten Kupplungsvorrichtungen (30, 12) in einem Zwischenteil des Kontaktes (4) ein Langloch (12) aufweisen und einen auf dem besagten Drücker (5) vorgesehenen und in dem besagten Loch fest eingeschlossenen Nocken (30).

9. Vorrichtung gemäß Anspruch 8, dadurch gekennzeichnet, daß das besagte Loch ein einer der selbstreinigenden vorderen und hinteren Gabeln (10, 11) des Kontaktes zugehöriges Federungsloch ist, welches einen möglichen Hub des Drückers relativ zum Kontakt zwischen der besagten geschlossenen Position auf dem Ende (2A) der Hülse (1) und einer sogenannten halb gezogenen Position des Drückers (5) definiert .

10. Vorrichtung gemäß einem der Ansprüche 8 - 9, dadurch gekennzeichnet, daß die besagte Hülse einen inneren, vorderen und gewissermaßen End-Ansatz (32) , über die besagte halb-gezogene Position hinaus in eine sogenannte ganz gezogene Position, als Endanschlag für den Drücker umfaßt.

11. Vorrichtung gemäß einem der Ansprüche 1 - 10, dadurch gekennzeichnet, daß die besagte Hülse (1) mit Fett gefüllt ist.

12. Anschlußleiste, dadurch gekennzeichnet, daß sie aus einer Reihe von Vorrichtungen gemäß einem der Ansprüche 1 - 11 gebildet wird, welche in mindestens einer Reihe aneinandergereiht sind.

## Claims

1. A connection device including firstly an insulation-displacement contact (4) having a "front" insulation-displacement fork (10) and a "rear" insulation-displacement fork (11) at respective opposite ends of the contact, which contact is mounted in a sleeve (1) that is open at a "front" end and that is provided with a conductor inlet (17) for receiving a conductor to be connected to said rear insulation-displacement fork (11), and secondly a front plunger mounted to move in the sleeve and on the contact, which plunger is provided with holding means (24, 25, 27) for holding a wire to be connected to said front insulation-displacement fork (10), said contact (4) itself being mounted to move in said sleeve (1) between an "out" position, in which said front insulation-displacement fork (10) projects outwardly at least in part relative to said front end of the sleeve (1) and said rear insulation-displacement fork (11) is set back relative to the conductor inlet (17), and an "in" position, in which said front insulation-displacement fork (10) and said rear insulation-displacement fork (11) extend respectively in the "front" end portion of the sleeve (1) and in the "rear" end portion thereof, by said plunger (5) being pushed into the sleeve until it reaches a "closed" position in which it is closed on the front end, said connection device being characterized in that said plunger (5) and said contact (4) are provided with coupling means (30, 12) for coupling them together, so that said contact (4) is entrained in said sleeve (1) from said in position to said out position by actuating said plunger so that it goes from said closed position to a "fully-pulled-out" position.

2. A device according to claim 1, characterized in that said contact (4) includes two opposite and projecting side tabs (14), and in that said sleeve (1) includes two internal facing slots (15) receiving said side tabs of the contact and defining the stroke of the contact between its in position and its out position.

3. A device according to any one of claims 1 to 2, characterized in that it includes locking means (14A, 16) for locking said contact (4) in the in position.

4. A device according to claim 3, characterized in that said locking means include at least one transverse arm (14A) provided on said contact (4) and projecting outwardly from the sleeve via a corresponding window (15A) in the sleeve, and a retaining plate (16) for holding each arm stationary, which plate is removably mounted on the outside of the sleeve.

5. A device according to any one of claims 2 to 4, characterized in that said sleeve (1) is constituted by a rear sleeve (3) and a front sleeve (2), which sleeves are mounted end-to-end, are secured together, and are open to each other at the join between them.

6. A device according to claim 5, characterized in that said slots (15) extend in a front portion of said rear sleeve (3).

7. A device according to any one of claims 1 to 6, characterized in that said conductor inlet (17) is constituted firstly by two holes in the respective rear portions of the walls of the sleeve that are parallel to the contact (4) and secondly, on the outsides of the walls, by a guide trough (18) opening out in one of the holes, and by a stop (19) facing the other hole.

8. A device according to any one of claims 1 to 7, characterized in that said coupling means (30, 12) are provided with an elongate aperture (12) in an intermediate portion of the contact (4), and with a lug (30) disposed on said plunger (5) and captively received in said aperture.

9. A device according to claim 8, characterized in that said aperture is a resilience-imparting aperture associated with either the front insulation-displacement fork (10) or with the rear insulation-displacement fork (11) of the contact, thereby delimiting a possible stroke for the plunger relative to the contact between a "closed" position in which the plunger (5) is closed on the front end (2A) of the sleeve (1), and a "half-pulled-out" position.

10. A device according to claim 8 or 9, characterized in that said sleeve is provided with a front and almost-end internal shoulder (32) serving as an end-of-stroke abutment for the plunger, in a "fully-pulled-out" position beyond said half-pulled-out position.

11. A device according to any one of claims 1 to 10, characterized in that said sleeve (1) is filled with grease.

12. A connection strip, characterized in that it is formed by a series of devices, according to any one of claims 1 to 11, juxtaposed in at least one row.
